# EUROPEAN PATENT APPLICATION

(11) **EP 4 681 517 A1**
(43) Date of publication of application: **21.01.2026**
(21) Application number: 24189707.3
(22) Date of filing: 19.07.2024
(51) Int. Cl.: A01B 45/02, A01B 49/02, A01B 63/04

(54) **SOIL WORKING DEVICE**

(71) Applicant: Redexim B.V., 3709 JA Zeist (NL)
(72) Inventor: DE BREE, Cornelis Herman G., 3709 JA Zeist (NL)
(74) Representative: dompatent

(57) **Abstract**

A soil working device (1) for creating cavities in a soil (7) is provided, with
- at least one machine frame (10) movable in the direction of travel,
- several tools (6) which can be moved up and down relative to the machine frame (10) and can thus be inserted into the soil (7) and pulled out again,
- at least one supporting device (4) arranged in front of the tools (6) in the direction of travel, which supports the machine frame (10) on the soil (7), the supporting device (4) preferably being a supporting roller,
- at least one height adjustment (12), which adjusts the distance between the supporting device (4) and the machine frame (10) in the height direction for setting the penetration depth of the tools (6) into the soil (7),
- at least one smoothing device (14) mounted on the machine frame (10), which is arranged behind the tools (6) in the direction of travel and smoothes the soil (7) processed by the tools (6), the smoothing device (14) preferably being a roller device,
wherein the smoothing device (14) can be adjusted in height relative to the machine frame (10) by means of the height adjustment device (12) of the supporting device (4), so that the smoothing device (14) can be transferred from a working position, in which the smoothing device (14) rests on the soil (7), to a position raised relative to the soil (7).

## Description

The invention relates to a soil working device according to claim 1, and to a method for creating cavities in a soil by means of a soil working device according to claim 11.

Soil working devices, known from the prior art, have at least one movable machine frame. These soil cultivating devices are often equipped with several tools which can be moved up and down relative to the machine frame in order to penetrate the soil and be pulled out again. At least one supporting device is often provided in front of the tools in the direction of travel to support the machine frame on the soil; this supporting device is preferably a supporting roller. In most cases, a height adjustment device is also provided, which adjusts the distance between the supporting device and the machine frame in the height direction in order to regulate the penetration depth of the tools into the soil. In addition, a smoothing device can be attached to the machine frame, which is located behind the tools in the direction of travel and is used to smooth the soil processed by the tools. This smoothing device can preferably be a roller device.

In most cases, the smoothing device follows the waves of the soil to be processed under its own weight, which is also referred to as a floating position. Under certain circumstances, however, the smoothing device must be lifted from the soil, e.g. when the soil working device is used to hollow out the soil. During this process, clods of soil are pulled out of the soil and fall to the ground to be collected afterwards.

It is not desirable for the smoothing device to roll over these clods of soil as it will crush them.

In the prior art, lifting the smoothing device is usually done by hand and is not very ergonomic, especially with larger models due to the weight of the smoothing device.

The object of the present invention is therefore to provide a soil working device and a method for creating cavities in a soil by means of a soil working device, in which the adjustment of the smoothing device is simplified.

The features of claims 1 and 11 provide a solution to this problem.

The invention advantageously provides that the smoothing device can be adjusted in height relative to the machine frame by means of the height adjustment device of the supporting device, so that the smoothing de-vice can be transferred from a working position, in which the smoothing device rests on the soil, to a position raised relative to the soil.

The present invention has the advantage that the smoothing device can be adjusted very easily. Furthermore, no additional height adjustment device is required. The height adjustment device already in use can be used.The supporting device can also be adjusted by means of the height adjustment device when adjusting the height of the smoothing device.

The smoothing device can be connected direct or indirect with at least two lever arms to the supporting device and can thus be pivoted relative to the supporting device and the machine frame.

In the case of an indirect connection of the lever arms to the supporting device, for example, a supporting strip can be provided to which the supporting device and the lever arms can be connected.

At least one holding device, in particular braking device, is provided, which is connected to the machine frame and at least one lever arm at at least one lever arm connection point.

The holding device can be actuated, so that the distance between the machine frame and the lever arm connection point can be fixed.

When the height adjustment device can be actuated and the supporting device can be adjusted in height, the smoothing device can pivot around the lever arm connection point, so that the distance between the smoothing device and the machine frame is reduced when the distance between the supporting device and the machine frame is increased.

The height adjustment device can be designed in such a way that the distance between the machine frame and the supporting device is increased in order to transfer the smoothing device from the working position to the raised position.

A fixing device can be provided, by means of which the position of the smoothing device relative to the supporting device can be fixed in the raised position.

The holding device can be released after the fixing device has been actuated.

When the fixing device is actuated and the holding device is not actuated, the distance between the supporting device and the smoothing device remains the same, even if the height adjustment device can be actuated..

According to the present invention a method for creating cavities in a soil by means of a soil cultivation device can be provided, which can comprise the following steps:
- moving at least one machine frame in the direction of travel,
- moving several tools up and down, thereby pushing them into the ground and pulling them out again,
- wherein the machine frame is supported on the soil by at least one support device arranged in front of the tools in the direction of travel, the supporting device preferably being a supporting roller,
- adjustment of the distance between the supporting device and the machine frame in the height direction by means of at least one height adjustment in order to adjust the penetration depth of the tools into the ground,
- smoothing the soil processed by the tools by means of at least one smoothing device mounted at the machine frame, wherein the smoothing device is arranged behind the tools in the direction of travel, the smoothing device preferably being a roller device,
wherein the height of the smoothing device can be adjusted in relation to the machine frame by means of the height adjustment device, so that the smoothing device can be transferred from a working position, in which the smoothing device rests on the floor, to a position raised relative to the floor.

The height of the supporting device can also be adjusted by means of the height adjustment device when the height of the smoothing device is adjusted.

The smoothing device can be connected directly or indirectly with at least two lever arms to the supporting device and can be pivoted relative to the supporting device and the machine frame, at least one holding device, in particular braking device, being connected to the machine frame and at least one of the lever arms at at least one lever arm connection point.

When the holding device is locked, the distance between the machine frame and the lever arm connection point is locked.

The distance between the machine frame and the supporting device can be increased in order to transfer the smoothing device from the working position to the raised position.

In the following, with reference to the drawings, embodiments of the present invention are explained in more detail.

It shows schematically:
Fig. 1 a soil working device,
Fig. 2 a section of the soil working device according to Fig. 1, and

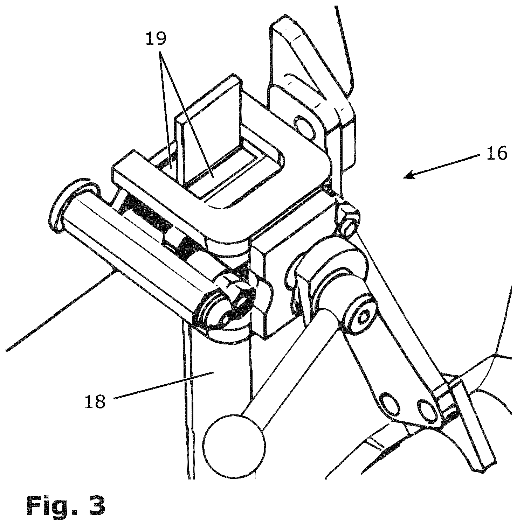

Fig. 3 a holding device.

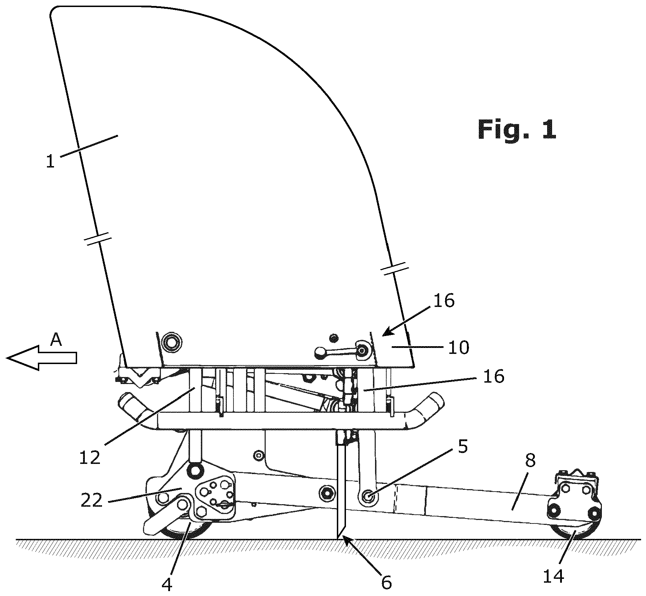

Fig. 1 shows the side view of a soil working device 1. The soil working device 1 comprises a machine frame 10. The soil working device 1 and thus also the machine frame can be movable. For this purpose, the soil working device 1 can comprise a coupling device with which the soil working device 1 can be coupled to a towing vehicle and can be pulled by the towing vehicle. Alternatively, the soil working device 1 can also be self-propelled.

The machine frame 10 can be supported on the soil 7 by a supporting device 4. The supporting device 4 can preferably be a supporting roller. The supporting roller can be a wheel, a roller or another moving support device. Preferably, the supporting device 4 is a supporting roller extending across the width of the soil working device 1. The soil working device 1 is pulled in the direction of travel A. The longitudinal axis of the supporting device 4 can run essentially orthogonal to the direction of travel A and parallel to the soil 7.

Tools 6 are coupled to the machine frame 10, which can be moved up and down in relation to the machine frame 10 and can thus be inserted into the soil 7 and pulled out again. The tools 6 are preferably piercing tools.

The soil working device 1 can comprise a crank drive for driving the tools 6 up and down, which for example drives a swivel arm via a push rod. A similar drive is disclosed, for example, in the European publication EP-A-0037595.

A height adjustment device 12 is also provided, which adjusts the distance between the supporting device 4 and the machine frame 10 in the height direction in order to regulate the penetration depth of the tools 6 into the soil 7. The height adjustment device 12 can be a hydraulic, pneumatic or electrical adjustment device, for example. In addition, a smoothing device 14 is arranged on the machine frame 10, which is located behind the tools 6 in the direction of travel A. The soil 7 processed by the tools can be smoothed by means of the smoothing device 14. The smoothing device 14 can preferably rest on the soil 7 with its own weight and follow the waves of the soil 7 to be processed under its own weight, which can also be referred to as a floating position. This smoothing device 14 can preferably be a roller device.

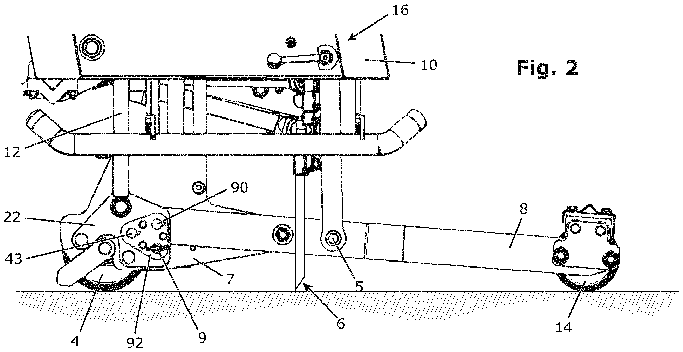

Fig. 2 shows a section of the soil working device from Fig. 1. The smoothing device 14 can be adjusted in height with respect to the machine frame 10 by means of the height adjustment device 12 of the supporting device 4, so that the smoothing device 14 can be transferred from a working position, in which the smoothing device 14 rests on the soil 7, to a position raised relative to the soil 7.

When adjusting the height of the smoothing device 14, the height of the supporting device 4 can also be adjusted by means of the height adjustment device 7.

The smoothing device 14 can be connected directly or indirectly to the supporting device 4 in an articulated manner on at least two lever arms 8 and can thus be pivoted relative to the supporting device 4 and the machine frame 10. In the embodiment example shown, the smoothing device 14 is only indirectly connected to the supporting device 4. Both the lever arms 8 and the supporting device are connected to a supporting strip 22.

A fixing device 9 may be provided, by means of which the position of the smoothing device 14 relative to the supporting device 4 can be fixed. In the illustrated embodiment example, the fixing device 9 is a bolt which can be inserted into the holes 90 or 92 extending through the supporting strip 22. If the bolt is inserted into the hole 93 the lever arm 8 is not fixed. If the bolt is inserted through the hole 90 and through a hole provided in the lever arm, the lever arm 8 can be fixed in relation to the supporting device. If the fixing device 9 is actuated, the height of the smoothing device 14 can be adjusted together with the supporting device.

There is also at least one holding device 16, in particular a braking device, which is connected to the machine frame 10 and at least one lever arm 8 at at least one lever arm connection point 5.

The holding device 16 can be fixed so that the distance between the machine frame 10 and the lever arm connection point 5 can be fixed.

If the fixing device 9 is not fixed, as shown in the illustrated embodiment example. On the other hand, if the holding device 16 is fixed, the smoothing device 14 can pivot about the lever arm connection point 5 when the height adjustment device 12 is actuated and the supporting device 4 is adjusted, so that the distance between the smoothing device 14 and the machine frame 10 is reduced when the distance between the supporting device 4 and the machine frame 10 is increased and vice versa.

The height adjustment device 12 can be designed in such a way that the distance between the machine frame and the supporting device is increased in order to move the smoothing device 14 from the working position to the raised position.

The fixing device 9 can be used to fix the position of the smoothing device 14 relative to the supporting device 4 in the raised position. For this purpose, the pin can be inserted through the hole 90 and a hole arranged behind it in the lever arm in the embodiment example provided.

The holding device 16 can be released after the fixing device 9 has been actuated.

If the fixing device 9 is actuated and the holding device is not actuated, the distance between the supporting device 4 and the smoothing device 14 can remain the same, even if the height adjustment device 12 is actuated.

Fig. 2 shows the holding device 16 in more detail. The holding device 16 shown is a braking device. The braking device comprises a brake strip 18, which connects the lever arm 8 and the machine frame 10. The brake strip 18 extends between two brake pads 19, so that the position of the brake strip 18 can be fixed as desired.

In a method for creating cavities in a soil by means of a soil working device, the following steps are provided:
- moving at least one machine frame 10 in the direction of travel,
- moving a plurality of tools 6 up and down, thereby inserting them into the soil and pulling them out again,
- wherein the machine frame is supported on the soil 7 by at least one supporting device 4 arranged in front of the tools in the direction of travel, the supporting device preferably being a supporting roller,
- Adjusting the distance between the supporting device 4 and the machine frame 10 in the height direction by means of at least one height adjustment 12 in order to adjust the penetration depth of the tools 6 in the floor,
- smoothing the soil processed by the tools by means of at least one smoothing device mounted on the machine frame, the smoothing device being arranged behind the tools in the direction of travel, the smoothing device preferably being a roller device,
wherein the height of the smoothing device is adjusted with respect to the machine frame by means of the height adjustment device, so that the smoothing device is transferred from a working position, in which the smoothing device rests on the soil, into a position raised relative to the soil.

By means of the height adjustment device 12, the height of the supporting device 4 can also be adjusted when adjusting the height of the smoothing de-vice.

The smoothing device 14 can be connected to the supporting device 4 by at least two lever arms 8 and can be pivoted relative to the supporting device 4 and the machine frame 10, wherein at least one holding device 16, in particular a braking device, is connected to the machine frame 10 and at least one of the lever arms 8 at at least one lever arm connection point 5.

The holding device 16 can be fixed, whereby the distance between the machine frame 10 and the lever arm connection point 5 is fixed.

To transfer the smoothing device (14) 4 from the working position to the raised position, the distance between the machine frame (10) 10 and the supporting device (4) 4 can be increased.
- 1: soil working device
- 4: supporting device
- 6: tools
- 7: soil
- 8: lever arm
- 9: fixing device
- 10: machine frame
- 12: height adjustment device
- 14: smoothing device
- 16: holding device
- 18: brake strip
- 22: supporting strip
- 90, 92, 93: hole

## Claims

1. Soil working device () for creating cavities in a soil (7), with
- at least one machine frame (10) movable in the direction of travel,
- several tools (6) which can be moved up and down relative to the machine frame (10) and can thus be inserted into the soil (7) and pulled out again,
- at least one supporting device (4) arranged in front of the tools (6) in the direction of travel, which supports the machine frame (10) on the soil (7), the supporting device (4) preferably being a supporting roller,
- at least one height adjustment (12), which adjusts the distance between the supporting device (4) and the machine frame (10) in the height direction for setting the penetration depth of the tools (6) into the soil (7),
- at least one smoothing device (14) mounted on the machine frame (10), which is arranged behind the tools (6) in the direction of travel and smoothes the soil (7) processed by the tools (6), the smoothing device (14) preferably being a roller device,
**characterized in that**
the smoothing device (14) can be adjusted in height relative to the machine frame (10) by means of the height adjustment device (12) of the supporting device (4), so that the smoothing device (14) can be transferred from a working position, in which the smoothing device (14) rests on the soil (7), to a position raised relative to the soil (7).

2. Soil working device (1) according to claim 1, **characterized in that** the height of the supporting device (4) can also be adjusted by means of the height adjustment device (12) when adjusting the height of the smoothing device (14).

3. Soil working device (1) according to claim 1 or 2, **characterized in that** the smoothing device (14) is connected direct or indirect with at least two lever arms (8) to the supporting device (4) and can thus be pivoted relative to the supporting device (4) and the machine frame (10).

4. Soil working device (1) according to claim 3, **characterized in that** at least one holding device (16), in particular braking device, is provided, which is connected to the machine frame (10) and at least one lever arm (8) at at least one lever arm connection point (5).

5. Soil working device (1) according to claim 4, **characterized in that** the holding device (16) can be actuated, so that the distance between the machine frame (10) and the lever arm connection point (5) can be fixed.

6. Soil working device (1) according to claim 4 or 5, **characterized in that** when the height adjustment device (12) is actuated and the support device (4) is adjusted in height, the smoothing device (14) pivots around the lever arm connection point (5), so that the distance between the smoothing device (14) and the machine frame (10) is reduced when the distance between the support device (4) and the machine frame (10) is increased.

7. Soil cultivation device (1) according to claim 6, **characterized in that** the height adjustment device (12) is designed in such a way that the distance between the machine frame (10) and the support device (4) is increased in order to transfer the smoothing device (14) from the working position to the raised position.

8. Soil tillage device (1) according to one of claims 1 to 7, **characterized in that** a fixing device (9) is provided, by means of which the position of the smoothing device (14) relative to the supporting device (4) can be fixed in the raised position.

9. Soil tillage implement (1) according to one of claims 1 to 8, **characterized in that** the holding device (16) is releasable after the fixing device (9) has been actuated.

10. Soil cultivation device (1) according to one of claims 1 to 9, **characterized in that** when the fixing device (9) is actuated and the holding device (16) is not actuated, the distance between the supporting device (4) and the smoothing device (14) remains the same, even if the height adjustment device (12) can be actuated..

11. Method for creating cavities in a soil (7) by means of a soil cultivation device (1), by
- moving at least one machine frame (10) in the direction of travel,
- moving several tools (6) up and down, thereby pushing them into the ground and pulling them out again,
- wherein the machine frame (10) is supported on the soil (7) by at least one supporting device (4) arranged in front of the tools (6) in the direction of travel, the supporting device (4) preferably being a supporting roller,
- adjustment of the distance between the supporting device (4) and the machine frame (10) in the height direction by means of at least one height adjustment (12) in order to adjust the penetration depth of the tools (6) into the ground,
- smoothing the soil (7) processed by the tools (6) by means of at least one smoothing device (14) mounted at the machine frame (10), wherein the smoothing device (14) is arranged behind the tools (6) in the direction of travel, the smoothing device (14) preferably being a roller device,
**characterized in that**
the height of the smoothing device (14) is adjusted in relation to the machine frame (10) by means of the height adjustment device (12), so that the smoothing device (14) is transferred from a working position, in which the smoothing device (14) rests on the floor, to a position raised relative to the floor.

12. Method according to claim 11, **characterized in that** the height of the supporting device (4) is also adjusted by means of the height adjustment device (12) when the height of the smoothing device (14) is adjusted.

13. Method according to claim 11 or 12, **characterized in that** the smoothing device (14) is connected with at least two lever arms (8) to the supporting device (4) and can be pivoted relative to the supporting device (4) and the machine frame (10), at least one holding device (16), in particular braking device, being connected to the machine frame (10) and at least one of the lever arms (8) at at least one lever arm connection point (5).

14. A method according to claim 13, **characterized in that** when the holding device (16) is locked, the distance between the machine frame (10) and the lever arm connection point (5) is locked.

15. Method according to one of claims 11 to 14, **characterized in that** the distance between the machine frame (10) and the supporting device (4) is increased in order to transfer the smoothing device (14) from the working position to the raised position.
